# EUROPEAN PATENT SPECIFICATION

(11) **EP 2 141 778 B1**
(45) Date of publication and mention of the grant of the patent: **31.08.2011**
(21) Application number: 09162944.4
(22) Date of filing: 17.06.2009
(51) Int. Cl.: H01R 13/533, H01R 13/74

(54) **Door connector**
Türverbinder
Connecteur de porte

(30) Priority: 30.06.2008 KR 20080062475
(43) Date of publication of application: 06.01.2010
(73) Proprietor: Tyco Electronics AMP Korea Ltd., Kyungsangbuk-Do Kyungsan-Si (KR)
(72) Inventor: Lee, Chul Sub, Kyungsan-Si (KR); Kwon, Gi Chan, Kyungsan-Si (KR)
(74) Representative: Johnstone, Douglas Ian

(56) References cited:
- GB-A- 2 286 930
- US-A- 4 149 766
- US-A- 5 249 982

## Description

The present invention relates to a connector for connecting a door of a vehicle with an electric cable of a main body of the vehicle, and more particularly to a door connector capable of achieving a stable connection with a panel of the vehicle body.

A door of a vehicle requires electric power to drive various parts such as a power window device, a locking device, a lighting device, a side mirror controller and an airbag actuation device. To this end, the vehicle door is equipped with an electric device, connected with a main controller of the vehicle, to be operated by a user.

Therefore, when assembling the vehicle door, a door connector is necessary to achieve electrical connection between a cable, which leads from the electric device of the door, and a cable of the vehicle main body. Since the door connector is used in a narrow space, at a hinged connection between the door and the vehicle, there have been prior efforts to facilitate the assembly of the vehicle door.

An example of such an effort is detailed in Korean Patent Laid-open No. 10-2008-0035199 titled "Cable connector for door of vehicle" filed previously by the applicant of the present application. The connector disclosed in this patent is shown in FIG. 7 and FIG. 8, and comprises a male connector 100 including a flange 110 between a connection terminal 120 and a penetration part 130, and a plurality of elastic members 310 disposed at outer sides of the penetration part 130, each including a fixing recess 311 for locking against an edge of a connector mounting recess 410 of a vehicle body panel 400. The connector also includes a female connector 200 which receives the penetration part 130 and is equipped with a connection terminal 230 therein. The male connector 100 and the female connector 200 can be assembled merely by push fitting without a dedicated fastening member such as a bolt.

More specifically, the male connector 100 is inserted into the connector mounting recess 410 and can be fixed to the connector mounting recess 410 by a simple push insertion operation. The elastic members 310 engage the edges of the connector mounting recess 410 by means of the fixing recess 311 therein thereby facilitating assembly.

The vehicle body panel 400 is interposed and fixed between the elastic members 310 and the flange 110. As each elastic member 310 gradually loses elasticity, as a result of vibrations transmitted during driving of the vehicle, a gap between the elastic member 310 and the flange 110 develops. Firmness of connection to the vehicle body panel 400 accordingly deteriorates.

Consequently, as the connector is shaken by vibrations resulting from driving of the vehicle, noise occurs due to rattling of the connector against the vehicle body panel. Furthermore, since friction abrasion occurs where each fixing recess 311 contacts the connector mounting recess 410, each elastic member 310 may lose sufficient force to hold the connector 100, thereby allowing the connector 100 escape from the vehicle body panel 400. In such a situation, apart from noise resulting from vibration, the cable may become folded possibly repeatedly and, more seriously, may even become damaged or severed.

US 5,249,982 discloses a connector housing having a front end for insertion into an aperture of a panel. Locking arms project from the housing to mount the housing in the aperture. Resilient flanges surround a substantial portion of the periphery of the housing, and a sealing boot surrounds the housing and the resilient flanges. The resilient flanges are adapted to bias a resilient lip of the sealing boot against the panel.

Therefore, the present invention has been made in view of the above problems, and it is an object of the present invention to provide a door connector capable of being stably fixed to a panel of a vehicle body by enhancing elasticity of a flange of the door connector.

It is another object of the present invention to provide a door connector capable of substantially preventing loss of elasticity of a flange thereof due to a fatigue resulting from use over a prolonged period.

It is another object of the present invention to provide a door connector which exhibits an improved elastic supporting force for the fixing thereof.

It is another object of the present invention to provide a door connector which is less liable to be damaged or broken during mounting.

It is a further object of the present invention to provide a door connector which is protected from internal parts around it, so as to be installable without interfering with such internal parts.

According to the invention there is provided a connector for mounting in a mounting hole of a panel of a vehicle door, the connector comprising a connector body which includes a protruding unit equipped with a fixing member to be inserted through the mounting hole to prevent separation of the connector from the panel, and a connection terminal unit connected with a cable and an elastic flange between the protruding unit and the connection terminal unit for elastically supporting the connector in the mounting hole. The flange includes an elastic supporting part having an upper curved surface which is convex towards the protruding unit and separated from the connector body so as to engage an edge of the mounting hole; and fixing parts fixing both ends of the elastic supporting part to the connector body.

The elastic supporting part may further include a lower curved surface formed at both ends of the upper curved surface which is convex towards the connection terminal unit.

A plurality of the elastic supporting parts may be formed on one surface of the flange.

The connector may further include a stopper formed at a lower surface of the upper curve surface to prevent or limit excessive elastic deformation of the elastic supporting part.

The connector may further include a cover plate formed at an outside of the flange to protect the elastic supporting part.

The above and other objects and features of the present invention will be more clearly understood from the following detailed description taken in conjunction with the accompanying drawings, in which:
FIG. 1 is a front perspective view of a door connector according to an embodiment of the present invention;
FIG. 2 is a plan view of the door connector shown in FIG. 1;
FIG. 3 is a front view of the door connector shown in FIG. 1;

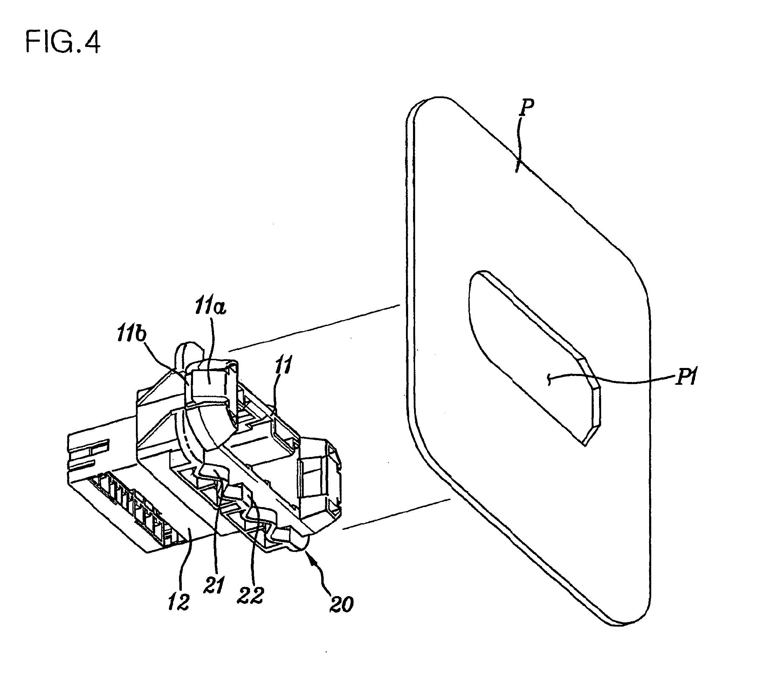

FIG. 4 is a view showing the door connector of FIG. 1 positioned for installation in a body panel;
FIG. 5 is a view showing the door connector shown in FIG. 4 connected to the body panel;
FIG. 6 is a further perspective view of the door connector shown in FIG. 1; and

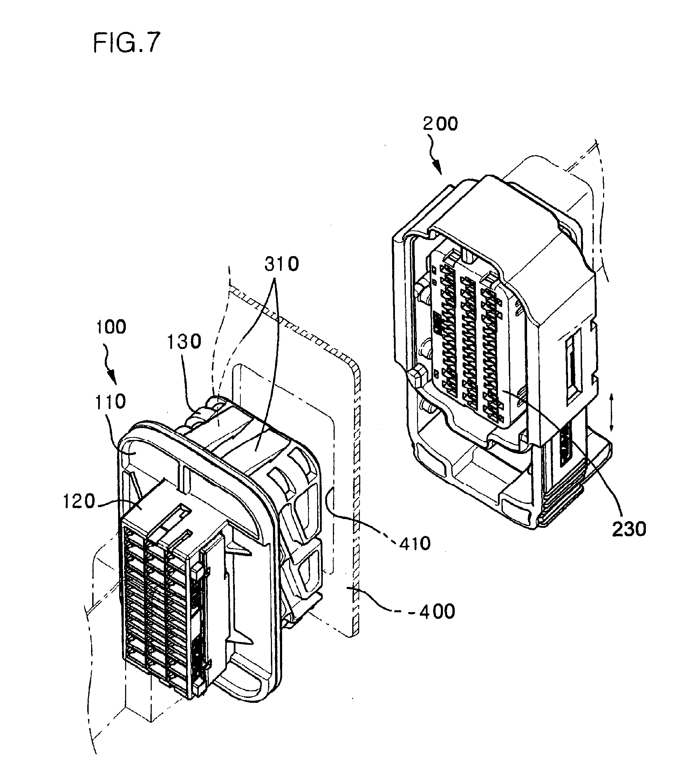

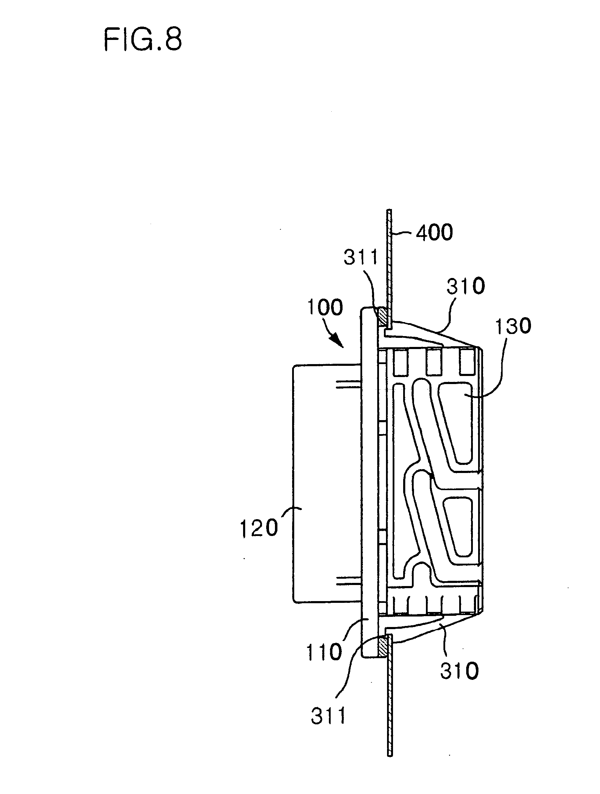

FIG. 7 and FIG. 8 are perspective views showing a conventional connector.

Hereinafter, an exemplary embodiment of the present invention will be described in detail with reference to the accompanying drawings.

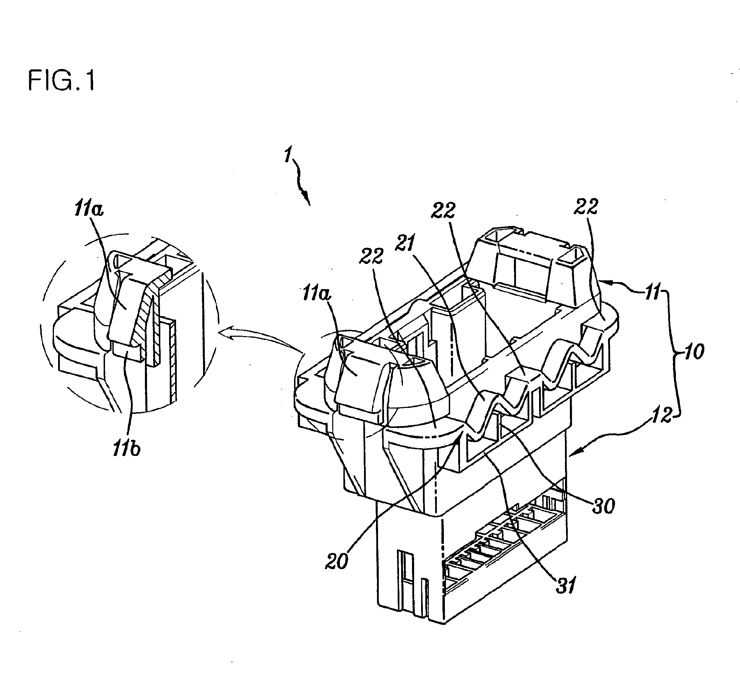

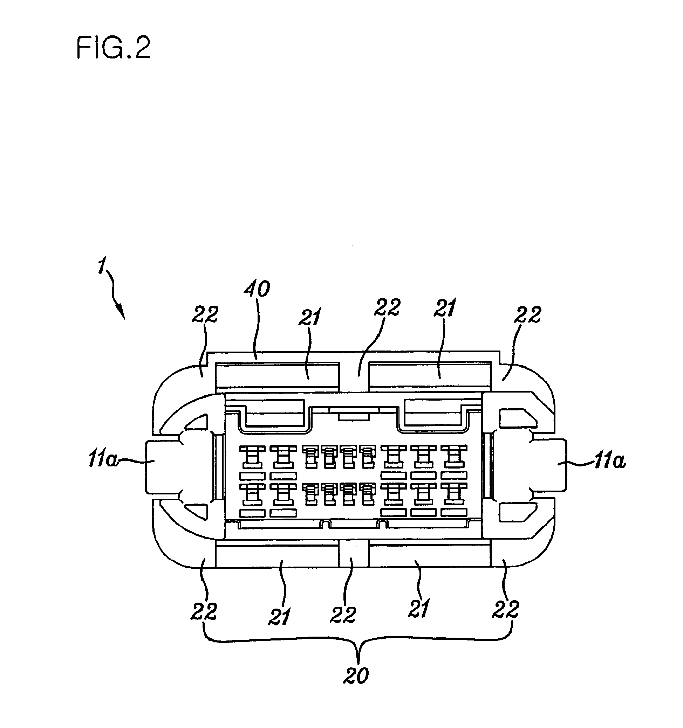

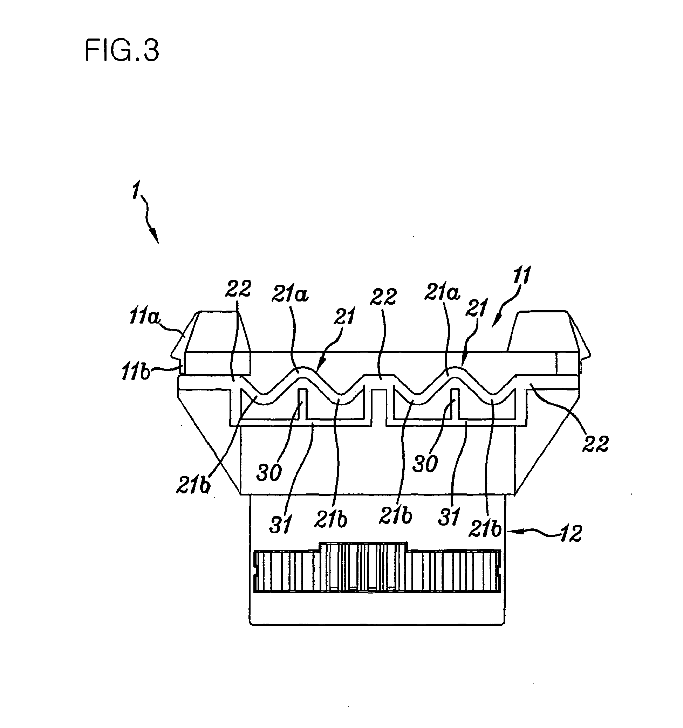

FIG. 1 is a perspective view of a door connector according to an embodiment of the present invention, as seen from the front. FIG. 2 and FIG. 3 are a plan view and a front view, respectively, of the door connector of FIG. 1.

Referring to the drawings, the door connector 1 comprises a connector body 10 including a protruding unit 11 a connection terminal unit 12. The protruding unit 11 is equipped with a fixing member for insertion into a mounting hole P1 of a panel P of a vehicle body to prevent separation of the connector 1 from the panel. The connection terminal unit 12 is connected to a cable. The flange 20 is between the protruding unit 11 and the connection terminal unit 12 and elastically engages the mounting hole P1.

More particularly, the connector body 10 comprises the protruding unit 11 which is inserted through the mounting hole P1 of the vehicle body panel P and protrudes to one side of the vehicle body panel P so that a counterpart connector is engageable therewith. The connection terminal unit 12 is disposed on the other side of the vehicle body panel P and is connected with a cable. In addition, the flange 20 is further provided at an interface between the protruding unit 11 and the connection terminal unit 12, and protrudes outwardly from the connector body 10 to overlap the vehicle body panel P around the mounting hole P1.

The fixing member passes through the mounting hole P1 of the vehicle body panel P to prevent separation of the connector 1 therefrom. The fixing member may be in various forms such as a dedicated supporting member connected to the protruding unit 11, a bolt, or an elastic member 11a integrally formed with the protruding unit 11 to engage the vehicle body panel P by elastically deforming.

More specifically, of the above examples, the dedicated supporting member (not shown) has a greater area than the mounting hole P1 and is fixed to the protruding unit 11 by typical connection methods such as a nut and bolt connection, adhesive, or a recess and protrusion connection arrangement, thereby preventing escape of the connector 1 from the mounting hole P1.

When a bolt (not shown) is used, the connection terminal unit 12 is formed with a greater sectional area than the mounting hole P1. Therefore, the bolt is connected to the connection terminal unit 12 by penetrating the vehicle body panel P, thereby fixing the connector 1 to the vehicle body panel P.

In the case where part of the protruding unit 11 is elastically deformed and thereby fixed, a plurality of the elastic members 11a may be formed on the outside of the protruding unit 11 as shown in FIG. 1. Each elastic member 11a includes a locking recess 11 b which is temporarily biased outward by elasticity of the elastic member 11 a and passes through the vehicle body panel P so that an edge of the mounting hole P1 engages in the locking recess 11 b.

Of the above various fixing members referred to above, the elastic member 11 a may effectively prevent separation of the connector 1 from the panel P through a simple inserting operation, and provide an excellent and straightforward assembly process.

The flange 20 elastically supports the edge of the mounting hole P1. Therefore, although the fixing member may lose elasticity or becomes loose due to prolonged use, contact between the mounting hole P1 and the fixing member is maintained.

Elasticity of the flange 20 exerts a force tending to separate the connector 1 from the mounting hole P1, thereby enhancing the supporting force of the fixing member with respect to the mounting hole P1.

Whereas a conventional flange has a plate form and merely limits the extent of insertion of the connector by contacting a surface around the mounting hole, which is its main function, the flange 20 according to the embodiment of the present invention not only functions as a stopper as described above but also enhances connection between the fixing member and the vehicle body panel P by having elasticity.

Such elasticity 20 may be provided by a generally elastic member such as a rubber member or a spring interposed between the flange 20 and the vehicle body panel P. However, in order to reduce cost and reduce the complication of assembly, it is preferred that the flange itself provides the elasticity by being partially deformable. Since connectors including such a flange, generally comprises synthetic resin, the connector may be integrally formed with the flange, thereby facilitating maintenance and assembly.

The flange 20 has elasticity, is integrally formed with the connector body 10 and comprises an elastic supporting part 21 and a fixing part 22. The elastic supporting part 21 has an upper curved surface 21 a which is convex towards the protruding unit 11, and is spaced apart from the connector body 10, so as to be able to elastically support the edge of the mounting hole P1. The fixing part 22 fixes both ends of the elastic supporting part 21 to the connector body 10.

Both ends of the elastic supporting part 21 are fixed and supported by the fixing parts 22 which are integrally formed with the connector body 10. The upper curved surface 21 a has a convex plate form which extends towards the mounting hole P1 is disposed between opposite ends of the supporting part and is spaced apart from the connector body 10.

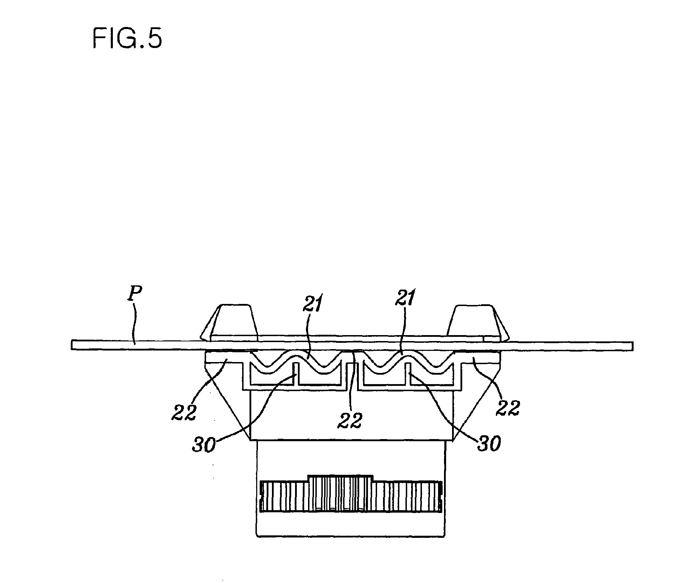

Therefore, when the connector 1 is inserted into the mounting hole P1 and fixed by the fixing members 11 a, a part around a top dead center of the upper curved surface 21 a is pushed down and elastically deforms against the edge of the mounting hole P1 as shown in FIG. 5, such that the fixing member, that is the elastic member 11 a, and the vehicle body panel P are joined to each other.

When vibration is continuously transmitted during driving of the vehicle and therefore fatigue is concentrated on both ends of the elastic supporting part 21, the fatigue is evenly distributed to both ends of the supporting part that are supported by the fixing parts 22. Accordingly, damage by fatigue may be restricted.

With the above structure, driving vibration transmitted to the elastic supporting part 21 is distributed to both ends thereof and deterioration of elasticity may be prevented. As a consequence, elasticity of the flange 20 can be constantly maintained in spite of prolonged use. Although elasticity of the fixing member gradually decreases due to the vibration fatigue, connection between the connector 1 and the vehicle body panel P is stably maintained, thereby improving the reliability of the connector 1.

According to the exemplary embodiment, the elastic supporting part 21 further includes lower curve surfaces 21 b formed at both ends of each upper curve surface 21 a which are convex and project towards the connection terminal unit 12.

The lower curved surfaces 21 b extend from the both ends of each upper curved surface 21 a in the opposite direction to the convex curve of the upper curved surface 21a. One side of each lower curved surface 21 b is fixed by the fixing part 22 and the elastic supporting part 21 is substantial W-shaped.

According to this structure, stress from the elastic supporting part 21 resulting from elastic deformation of the upper curve surface 21 a is transmitted to the lower curved surfaces 21 b, thereby being greatly reduced, and is then transmitted to the fixing parts 22. Therefore, even when the elastic supporting part 21 is excessively deformed during assembling of the connector 1, damage at the connection part between the elastic supporting part 21 and the fixing part 22 may be prevented.

Furthermore, since the lower curved surfaces 21 b further absorb the vibration transmitted to the connector 1 from the upper curve surfaces 21 a, during driving of the vehicle, concentration of fatigue to the connection part between the elastic supporting parts 21 and the fixing parts 22 may be even more effectively reduced and elasticity of the flange 20 can be maintained for a long time.

Moreover, a plurality of the elastic supporting parts 21 may be provided on one side of the flange 20.

As vehicle door technology develops, the number of electric parts in the vehicle door increases. This necessitates more cables and an ever increasing size of connector for connecting the cables. Since the length of the flange is increased due to the increase in size of the connector, the elastic supporting parts can be provided at plural locations along the elongated connector.

For the embodiment described, two elastic supporting parts 21 are arranged linearly along the flange 20. The specific number of elastic supporting parts 21 may however be determined by the size of the connector and accordingly more than two may be provided.

Since the elastic supporting parts 21 arranged linearly on the flange 20 each have elasticity, even if one elastic supporting part 21 is abnormally formed or damaged during insertion of the connector, the connection between the connector and the vehicle body panel P may be reliably maintained by the other elastic supporting parts 21. Thus, a reliable securing of the connector is provided.

In addition, a stopper 30 may be further formed at a lower part of the or each upper curved surface 21a to prevent the upper curved surface 21a from being displaced by an excessive degree or to limit its displacement.

When the elastic supporting parts 21 are elastically depressed by contacting the vehicle body panel P, the stoppers 30 restrain the elastic supporting parts 21 against deforming by more than a predetermined amount, thereby preventing damage of both ends of elastic supporting parts 21 which are connected to the fixing parts 22.

Each stopper 30 protrudes outwardly from the connector body 10 adjacent a lower part of the upper curve surface 21 a so as to support a concave inside face of the upper curve surface 21 a.

One longitudinal end of the stopper 30 is spaced apart from the concave inside face of the upper curve surface 21 a so that the concave inside face of the upper curve surface 21 a is elastically deformable so as to come into contact with the longitudinal end of the stopper 30 and therefore be prevented from being further deformed.

An auxiliary flange 31 may be further provided to reinforce the stopper 30. The auxiliary flange 31 vertically contacts and supports the other longitudinal end of the stopper 30. Both ends of each auxiliary flange 31 are bent and connected with the fixing part 22.

The stopper 30, the auxiliary flange 31, and the fixing part 22 vertically contact with one another and are all integrally formed with an outer surface of the connector body 10. Therefore, the stopper 30 may not be easily broken away from the connector body 10 even when subjected to a considerable force.

When the stopper 30 is thus provided, the elastic supporting part 21 is not deformed beyond its elastically restorable range during the assembly, accordingly elasticity of the elastic supporting part is not diminished by the assembly process.

Furthermore, the auxiliary flange 31 prevents interference from other parts which may approach the connector from the direction of connection terminal unit 12. This ensures that the stopper 30 and the elastic supporting part 21 can continue to operate correctly.

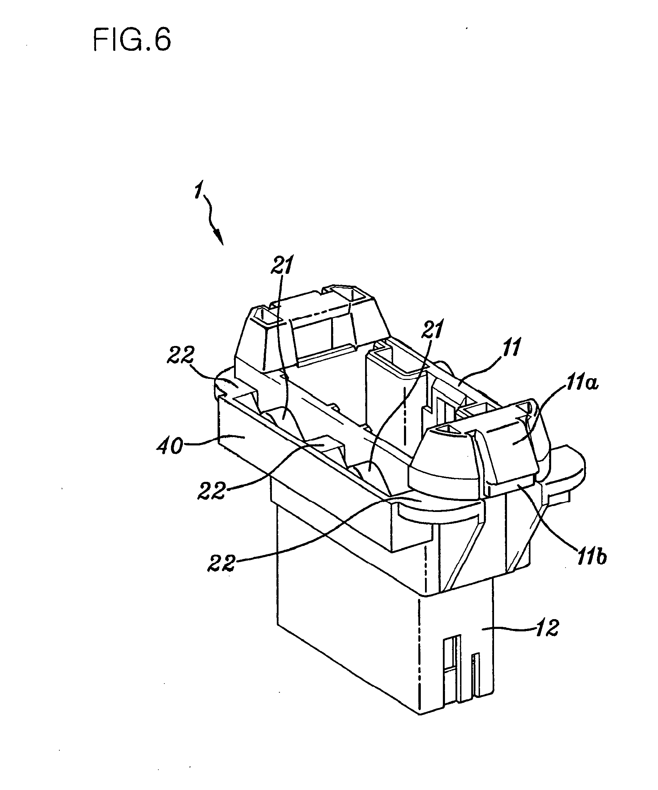

FIG. 6 is a perspective view of the door connector of FIG. 1, as seen from the rear side.

A cover plate 40 may be formed at the outside of the flange 20 to protect the elastic supporting parts 21.

The cover plate 40 is disposed parallel with the outer surface of the connector body 10 and supported by the fixing parts 22. The cover plate 40 is spaced apart from the elastic supporting parts 21 so as not to interfere with the elastic deformation of the elastic supporting parts 21.

Accordingly, the elastic supporting parts 21 of the connector 1 are protected from interference by parts situated in the vehicle body panel P and therefore avoid deformation. As a result, defective assembly can be prevented.

The stopper 30 and the cover plate 40 may be provided at both sides of the connector 1 or at one of the flanges 20 selectively.

As described above, in a door connector according to the embodiment of the present invention, the connector can be prevented from being inserted too far into a vehicle body panel as the elasticity of a flange of the connector prevents this. Furthermore, since connection between a fixing member and the vehicle body panel is reinforced by elasticity of the flange, the connector is prevented from becoming loosened by vibrations resulting from driving even after prolonged use.

Both ends of an elastic supporting part are fixed to a fixing part. Therefore, although fatigue resulting from vibration is continuously transmitted by driving of the vehicle; the fatigue is distributed to the both ends of the elastic supporting parts, thereby restricting damage of the elastic supporting parts by the fatigue.

Each elastic supporting part according to the embodiment of the present invention is structured to prevent deterioration of its elasticity. That is, elasticity of the flange is maintained in a stable manner in spite of prolonged use. Therefore, although the fixing member gradually loses elasticity due to fatigue resulting from the vibration, connection between the connector and the vehicle body panel is maintained, thereby improving the reliability of the connector.

In addition, when the elastic supporting part includes a lower curved surface, stress within the elastic supporting part, caused by elastic deformation of the lower curved surface, is transmitted to the lower curved surface, thereby being considerably reduced, and then transmitted to the fixing member. Therefore, although the elastic supporting part is excessively deformed during assembly of the connector, a connection part between the elastic supporting part and the fixing part may be protected from damage.

Moreover, vibrations transmitted to the connector during driving of the vehicle may be further absorbed by the lower curved surface in addition to being absorbed by the upper curved surface. Therefore damage to the connection part between the elastic supporting part and the fixing part can be reduced more effectively. As a result, elasticity of the flange can be maintained for longer.

When a stopper is provided, the elastic supporting part may be prevented from deforming excessively beyond a restorable range during assembly. Accordingly elasticity is stably maintained even after assembly.

When a cover plate is further provided, the elastic supporting part may be protected from interference by internal parts situated interiorly of the vehicle body panel and therefore normally protected against deformation. As a result, defective assembly may be prevented.

## Claims

1. A connector (1) for mounting in a mounting hole (P1) of a panel (P) of a vehicle door, the connector (1) comprising:
a connector body (10) which includes a protruding unit (11) equipped with a fixing member (11a) to be inserted through the mounting hole (P1) to prevent separation of the connector (1) from the panel (P), and a connection terminal unit (12) connected with a cable;
an elastic flange between the protruding unit (11) and the connection terminal unit (12) for elastically supporting the connector (1) in the mounting hole (P1); and
**characterised in that** the elastic flange (20) comprises:
an elastic supporting part (21) having an upper curved surface (21 a) which is convex towards the protruding unit (11) and disposed apart from the connector body (10) so as to engage an edge of the mounting hole (P1); and
fixing parts (22) fixing both ends of the elastic supporting part (21) to the connector body (10).

2. The connector (1) according to claim 1, wherein the elastic supporting part (21) further comprises a lower curved surface (21 b) formed at both ends of the upper curved surface (21 a) which is convex towards the connection terminal unit (12).

3. The connector (1) according to claim 1 or 2, wherein a plurality of the elastic supporting parts (21) are formed on one surface of the flange.

4. The connector (1) according to any one of claims 1 to 3, further comprising a stopper (30) formed at a lower surface of the upper curve surface (21 a) to limit elastic deformation of the elastic supporting part (21).

5. The connector (1) according to any one of claims 1 to 3, further comprising a cover plate (40) formed at an outside of the flange to protect the elastic supporting part (21).

## Patentansprüche

1. Verbinder (1) für ein Montieren in einem Montageloch (P1) eines Karosseriebleches (P) einer Fahrzeugtür, wobei der Verbinder (1) aufweist:
einen Verbinderkörper (10), der ein vorstehendes Bauteil (11), das mit einem Befestigungselement (11a) ausgestattet ist, damit es durch das Montageloch (P1) eingesetzt wird, um die Trennung des Verbinders (1) vom Karosserieblech (P) zu verhindern, und ein Verbindungsklemmenteil (12) umfasst, das mit einem Kabel verbunden ist;
einen elastischen Flansch zwischen dem vorstehenden Bauteil (11) und dem Verbindungsklemmenteil (12) für das elastische Tragen des Verbinders (1) im Montageloch (P1); und
**dadurch gekennzeichnet, dass** der elastische Flansch (20) aufweist:
ein elastisches Trägerteil (21) mit einer oberen gebogenen Fläche (21a), die in Richtung des vorstehenden Bauteils (11) konvex und vom Verbinderkörper (10) entfernt angeordnet ist, um so mit einem Rand des Montageloches (P1) in Eingriff zu kommen; und
Befestigungsteile (22), die beide Enden des elastischen Trägerteils (21) am Verbinderkörper (10) befestigen.

2. Verbinder (1) nach Anspruch 1, bei dem das elastische Trägerteil (21) außerdem eine untere gebogene Fläche (21b) aufweist, die an beiden Enden der oberen gebogenen Fläche (21a) ausgebildet ist, die in Richtung des Verbindungsklemmenteils (12) konvex ist.

3. Verbinder (1) nach Anspruch 1 oder 2, bei dem eine Vielzahl der elastischen Trägerteile (21) auf einer Fläche des Flansches ausgebildet ist.

4. Verbinder (1) nach einem der Ansprüche 1 bis 3, der außerdem einen Anschlag (30) aufweist, der auf einer unteren Fläche der oberen gebogenen Fläche (21a) ausgebildet ist, um die elastische Verformung des elastischen Trägerteils (21) zu begrenzen.

5. Verbinder (1) nach einem der Ansprüche 1 bis 3, der außerdem eine Abdeckplatte (40) aufweist, die auf einer Außenseite des Flansches ausgebildet ist, um das elastische Trägerteil (21) zu schützen.

## Revendications

1. Connecteur (1), destiné à être monté dans un trou de montage (P1) d'un panneau (P) d'une porte d'un véhicule, le connecteur (1) comprenant :
un corps de connecteur (10), englobant une partie en saillie (11) équipée d'un élément de fixation (11a) destiné à être inséré à travers le trou de montage (P1), pour empêcher une séparation du connecteur (1) du panneau (P), et une unité de borne de connexion (12) connectée à un câble ;
une bride élastique entre l'unité en saillie (11) et l'unité de borne de connexion (12), pour supporter de manière élastique le connecteur (1) dans le trou de montage (P1) ; et
**caractérisé en ce que** la bride élastique (20) comprend :
une partie de support élastique (21), comportant une surface courbée supérieure (21a), convexe en direction de l'unité en saillie (11) et agencée à l'écart du corps du connecteur (10) en vue de l'engagement dans un bord du trou de montage (P1) ; et
des parties de fixation (22), fixant les deux extrémités de la partie de support élastique (21) sur le corps du connecteur (10).

2. Connecteur (1) selon la revendication 1, dans lequel la partie de support élastique (21) comprend en outre une surface courbée inférieure (21b) formée au niveau des deux extrémités de la surface courbée supérieure (21a), convexe en direction de l'unité de borne de connexion (12).

3. Connecteur (1) selon les revendications 1 ou 2, dans lequel plusieurs parties de support élastiques (21) sont formées sur une surface de la bride.

4. Connecteur (1) selon l'une quelconque des revendications 1 à 3, comprenant en outre un butoir (30), formé au niveau d'une surface inférieure de la surface courbée supérieure (21a), pour limiter la déformation élastique de la partie de support élastique (21).

5. Connecteur (1) selon l'une quelconque des revendications 1 à 3, comprenant en outre une plaque de couverture (40) formée au niveau d'une partie externe de la bride, pour protéger la partie de support élastique (21).
